Europäisches Patentamt

European Patent Office

Office européen des brevets

(19)

(11) Numéro de publication : **0 168 335**
**B1**

(12) **FASCICULE DE BREVET EUROPÉEN**

(45) Date de publication du fascicule du brevet :
09.08.89

(21) Numéro de dépôt : 85440041.3

(22) Date de dépôt : 12.06.85

(51) Int. Cl.⁴ : **G 01 S 11/00**, G 01 S 13/60,
G 01 P 3/66, G 01 P 3/68

(54) **Procédé de construction de système micro-ondes et de traitement du signal par corrélation.**

(30) Priorité : 21.06.84 FR 8410286
12.03.85 FR 8503990

(43) Date de publication de la demande :
15.01.86 Bulletin 86/03

(45) Mention de la délivrance du brevet :
09.08.89 Bulletin 89/32

(84) Etats contractants désignés :
AT CH DE GB IT LI SE

(56) Documents cités :
DE—A— 2 712 600
DE—A— 3 030 229
FR—A— 2 278 081
US—A— 3 155 974
US—A— 3 243 145
US—A— 4 041 293
US—A— 4 131 891
MESSTECHNIK, no.8, août 1971, pages 163-168;
Munich, DE F. MESCH et al.: "Geschwindigkeitsmessung mit Korrelationsverfahren."
OPTO-ELECTRONICS, vol. 4, novembre 1972, pages
451-462; Chapman and Hall LTD. F. MESCH et al.:
"Solids flow measurement by correlation methods."
JOURNAL OF MICROWAVE POWER, vol. 10, no.3,
septembre 1975, pages 297-307; Edmonton, CA A.M.
BOTTREAU et al.: "Double track reflecto-interferometer for complex permittivity measurements on
high loss liquids."
JOURNAL OF APPLIED PHYSICS, vol.54, no.6, juin
1983, pages 3394-3398; New-York, US R.T. KINASE-
WITZ et al.: "Investigation of the complex permittivity
of N-type silicon at milimeter wavelengths."

(73) Titulaire : **CENTRE NATIONAL DE LA RECHERCHE
SCIENTIFIQUE (CNRS)**
**15, Quai Anatole France**
**F-75007 Paris (FR)**

(72) Inventeur : **Van De Velde, Jean-Claude**
**Résidence de l'Europe - C7/233**
**F-59370 Mons-en-Baroeul (Nord) (FR)**
Inventeur : **Leroy, Yves**
**80 rue Gaston Baratte**
**F-59650 Villeneuve D'Ascq (Nord) (FR)**
Inventeur : **Mamouni, Ahmed**
**351/42 rue Baudouin IX**
**F-59650 Villeneuve D'Ascq (FR)**

(74) Mandataire : **Lepage, Jean-Pierre**
**Cabinet Lepage & Aubertin Innovations et Prestations 23/25, rue Nicolas Leblanc B.P. 1069**
**F-59011 Lille Cédex 1 (Nord) (FR)**

CONFERENCE PROCEEDINGS: 15th Microwave Conference "European Mcrowave 85", Paris, 9-13 septembre 1985; Microwave Exhibitions and Publishers Ltd., Tunbridge Wells, Kent, GB J.C. VAN DE VELDE et al.: "Short range telemetric sensors using microwave correlators." pages 376-381

DAVENPORT and ROOT : An Introduction to the Theory of RANDOM SIGNALS AND NOISE, 1958, McGRAW-Hill

M.I.SKOLNIK : RADAR HANDBOOK, 1970, McGRAW-HILL

**Description**

L'invention est relative à un procédé de construction de systèmes micro-ondes et de traitement du signal par corrélation.

Elle trouvera notamment son application en cinémométrie, télémétrie, asservissement de direction et de poursuite tel que notamment en robotique, détection d'hétérogénéité et de discontinuité dans un matériau à partir de capteurs fonctionnant au contact ou sans contact.

Actuellement, les principales techniques utilisées en cinémométrie sans contact font appel à l'effet Doppler. Ce phénomène trouve de nombreuses applications et en particulier, il est utilisé pour connaître avec précision la vitesse d'un mobile, en émettant une onde de fréquence donnée en direction du mobile, et en analysant la fréquence réfléchie par le dit mobile.

Il est connu que lorsque la distance entre une source d'émission de fréquence fixe et d'une antenne de réception varie, la fréquence apparente captée par la dite antenne est décalée par rapport à la fréquence d'émission. Le décalage est proportionnel à la vitesse de déplacement du point d'émission par rapport au point de réception selon l'axe les reliant.

Cependant, le cinémomètre fondé sur l'effet Doppler est peu sensible lorsque la distance de la source à l'objet sous investigation varie peu au cours du temps, par exemple lorsque le déplacement de l'objet est perpendiculaire à la direction d'observation. En effet, l'inconvénient réside dans le fait que la direction de propagation de l'onde incidente et de l'onde réfléchie doit être sensiblement située dans la direction de déplacement du mobile pour obtenir une précision de mesure optimale.

La technique mise au point par les inventeurs est décrite dans la présente demande de brevet est différente et s'applique en particulier au cas où le mobile se déplace perpendiculairement à la direction d'observation.

Par ailleurs, cette invention peut notamment s'appliquer à la mesure de la distance séparant le mobile du point d'observation, à partir des signaux obtenus, en modifiant les conditions expérimentales telles que notamment la distance des mobiles et la distance entre les différentes antennes de réception.

Actuellement, les techniques d'asservissement de direction ou de poursuite utilisées font généralement appel soit à l'effet Doppler, soit à une mesure du temps de propagation d'une onde incidente et réfléchie. Pour les motifs exprimés précédemment, ces techniques ne sont pas pleinement satisfaisantes.

La détection d'hétérogénéité et de discontinuité dans un matériau fait appel à l'heure actuelle à différentes techniques telles que notamment à rayons X ou à échographie ultrasonore. Les premières nécessitent un maniement des appareils avec précaution, l'utilisation de blindage approprié et présente certains dangers par contre, les deuxièmes sont utilisés dans les cas très spécifiques et peuvent difficilement être étendues.

De plus, il est intéressant de mettre en œuvre des ondes de natures différentes telles que les micro-ondes qui seront sensibles à d'autres paramètres physiques et notamment la permitivité du milieu à la fréquence de travail. De telles ondes pourront donc être capables d'apporter des informations différentes ou complémentaires et présentent des avantages par rapport aux techniques utilisées.

Dans le domaine des micro-ondes, il est connu du document US-A-3 155 974 un dispositif de mesure de vitesse d'avion.

Selon ce document, on utilise les ondes micro-ondes émises naturellement par des cibles ou objets au sol, tels que notamment les habitations et on récupère cette émission naturelle à l'aide de deux antennes de réception agencées mécaniquement entre elles puis on traite les signaux par un ensemble électronique.

Toutefois, un tel dispositif n'est pas sans inconvénient car la mesure est tout à fait imprécise car il s'agit d'un système passif et on récupère des niveaux de signaux très faibles de l'ordre de $10^{-11}$ watts. De plus, la précision dépendra également de la précision de la fiabilité du système mécanique des antennes de réception.

Enfin, le système du brevet américain US-3 155 984 est limité à une utilisation mesure de vitesse et ne pourra pas en outre fonctionner dans le cas où le paysage est uniforme car ce dernier capte la variation de l'intensité due à une variation du paysage.

Il est également connu du document US-A-4 131 891 la réalisation d'un capteur de vitesse passif travaillant dans le domaine des micro-ondes.

Ce document décrit une technique voisine à celle du premier document américain précité et on retrouve sensiblement les mêmes inconvénients notamment le fait qu'il s'agit d'un système passif captant le faible rayonnement émis par le sol, rayonnement traité en tant que tel en fonction de l'altitude.

Par ailleurs, actuellement il existe aussi des méthodes de contrôle non destructif de matériaux, mais celles-ci sont fondées uniquement sur la transmission en micro-ondes pour un seul faisceau entre une antenne émettrice et une antenne réceptrice. Par contre, le procédé proposé par la présente invention est plus riche d'informations car il met en œuvre plusieurs faisceaux, en tenant compte en plus des différences de déphasage introduit par ces trajets, grâce à l'utilisation d'un corrélateur.

Le but principal de la présente invention est de présenter un procédé de construction de systèmes micro-ondes et de traitement du signal par corrélation qui, avec une mise en œuvre simple, trouve des applications en cinémométrie, télémétrie, asservissement de direction et de poursuite, détection d'hétérogénéité et de discontinuité dans un matériau et autres.

Le procédé de la présente invention fait appel à des dispositifs micro-ondes classiques et par conséquent disponibles.

En particulier, en cinémométrie, le procédé de la présente invention permet d'effectuer des mesures en plaçant le ou les dispositifs récepteurs tels que la disposition d'observation des antennes soit perpendiculaire à la trajectoire du mobile.

Conjointement à la mesure de vitesse et simultanément, le procédé de la présente invention permet également de mesurer la distance ou la variation de distance du mobile par rapport au point d'observation.

Une variante du procédé de la présente invention consiste à déceler le cas où le mobile est situé juste sur la direction d'observation du récepteur, c'est-à-dire l'axe imaginaire perpendiculaire au milieu du segment joignant les antennes de réception ainsi l'invention trouve notamment son application dans le pilotage d'engins télécommandés ou de véhicules, ou en robotique.

Un autre but de la présente invention est de proposer un procédé de construction de systèmes micro-ondes et de traitement du signal par corrélation qui trouvera notamment son application dans 'la détection de l'évolution au cours du temps d'un paramètre physique électro-magnétique en fonction d'un autre paramètre physique du matériau ou dans la détection d'hétérogénéité et de discontinuité dans les caractéristiques du matériau lors de son déplacement.

D'autres buts et avantages de la présente invention apparaîtront au cours de la description qui va suivre qui n'est cependant donnée qu'à titre indicatif et qui n'a pas pour but de la limiter.

Selon la présente invention, le procédé de mise en œuvre de systèmes micro-ondes et de traitement du signal par corrélation utilisant le rayonnement micro-onde, des antennes de réception des micro-ondes ainsi qu'au moins un corrélateur, le procédé est caractérisé par le fait que :

a) on dispose matériellement et relativement dans l'espace :
— une source micro-onde dont les caractéristiques sont déterminées,
— une antenne d'émission A en relation avec la dite source micro-onde,
— au moins deux antennes de réception $A_1$ et $A_2$ situées en différents points et espacées l'une de l'autre d'une distance ZD déterminée,
— au moins un corrélateur, de temps de retard $\tau$, en relation avec les dites antennes de réception $A_1$ et $A_2$, le dit corrélateur effectuant le produit des signaux présents à ses entrées à des instants différents entre eux du dit temps de retard $\tau$, et délivrant à sa sortie un signal de sortie S qui est une fonction périodique de la différence des trajets des ondes entre l'antenne d'émission A et chacune des antennes de réception $A_1$, $A_2$ pour des valeurs du temps de retard $\tau$,

b) on émet un rayonnement micro-onde unique à l'aide de la dite source micro-onde et de la dite antenne d'émission A,

c) on capte à l'aide des dites antennes de réception $A_1$ et $A_2$, les signaux dus au dit rayonnement micro-ondes émis, le signal perçu par l'antenne étant désigné par $v_1(t)$ et celui perçu par l'antenne $A_2$ étant désigné par $v_2(t)$,

d) on dirige les dits signaux $v_1(t)$ et $v_2(t)$ perçus par les antennes $A_1$ et $A_2$ vers le dit corrélateur, celui-ci délivrant alors en sortie un signal S donné par la relation suivante :

$$S = \overline{Kv_1(t) \cdot v_2^*(t - \tau)} = KV_1 V_2 \cos (\varphi + 2\pi f\tau)$$

relation dans laquelle K est une constante caractéristique du circuit, $v_1(t)$ et $v_2(t)$ sont les tensions captées par les antennes $A_1$ et $A_2$ respectivement dont les amplitudes sont $V_1$ et $V_2$, $\varphi$ est le déphasage qui correspond à la différence des trajets de l'onde entre l'antenne d'émission A et les antennes de réception $A_1$ et $A_2$ espacées de la distance ZD, $\tau$ est le temps de retard introduit par le corrélateur,

e) on exploite le spectre de fréquence du signal de sortie S du corrélateur par tout dispositif permettant de mesurer l'intervalle de temps séparant deux passages au zéro du dit signal de sortie S.

En outre, selon la présente invention, on appliquera le procédé de mise en œuvre de systèmes micro-ondes et de traitement du signal par corrélation à la mesure de vitesse d'un mobile, à l'asservissement de direction ou de poursuite d'un mobile, à la détection d'hétérogénéité et de discontinuité dans un matériau, à la détection de l'évolution au cours du temps d'un paramètre physique électro-magnétique en fonction d'un autre paramètre physique dans un matériau ainsi qu'à la détection d'hétérogénéité et de discontinuité dans un matériau.

L'invention sera mieux comprise à la lecture de la description suivante accompagnée des dessins en annexe parmi lesquels :

la figure 1 schématise un dispositif de mise en œuvre du procédé de construction de systèmes micro-ondes et de traitement du signal par corrélation selon la présente invention,

les figures 2a et 2b représentent les signaux de sortie du corrélateur dans un cas d'application à la télémétrie pour le cas de deux vitesses différentes,

la figure 3 illustre un dispositif de mise en œuvre du procédé de la présente invention appliqué à la cinémométrie,

la figure 4 représente un dispositif de mise en œuvre du procédé de la présente invention appliqué à la mesure de vitesse et de distance,

la figure 5 schématise un dispositif de détection d'hétérogénéité et de discontinuité dans un matériau selon le procédé de la présente invention,

la figure 6 schématise un dispositif de détection de l'évolution au cours du temps d'un paramètre physique électro-magnétique en fonction d'un autre paramètre physique dans un matériau, selon la présente invention,

la figure 7 schématise un dispositif de détection d'hétérogénéité et de discontinuité dans un matériau selon le procédé de la présente invention,

la figure 8 représente un détail du corrélateur utilisé pour mettre en œuvre le procédé de la présente invention,

la figure 9 représente un détail d'un autre mode de réalisation du corrélateur utilisé pour la mise en œuvre du procédé de la présente invention.

Il est connu d'utiliser le principe de corrélation pour analyser les liens existants entre deux signaux issus de sources distinctes. Il s'agit du procédé classique d'utilisation de la corrélation qui, dans une configuration donnée, permet d'examiner les rapports existants entre deux signaux dont l'un d'entre eux présente des caractéristiques déterminées.

Selon le procédé de construction de systèmes micro-ondes et de traitement du signal par corrélation de la présente invention, on utilise un générateur de micro-onde de caractéristiques déterminées dont on capte le rayonnement à l'aide d'antennes distinctes. Puisque dans le cas présent, on connaît la nature du signal d'émission, l'analyse du signal de réception permet de déterminer la configuration particulière dans laquelle le signal est émis et perçu par le corrélateur.

Il s'agit par conséquent d'une utilisation de la corrélation différente de son usage traditionnel. Ce procédé de construction de systèmes micro-ondes et de traitement du signal par corrélation de la présente invention trouve de nombreuses applications dont la cinémométrie, la télémétrie, l'asservissement de direction et de poursuite, la détection d'hétérogénéité et de discontinuité dans les matériaux. Ces différentes applications seront étudiées successivement dans la suite de la description.

Il est à remarquer que dans toute la description, il est fait référence aux micro-ondes, il s'agit toutefois d'une notion large qui peut être étendue à tout rayonnement électro-magnétique ou en acoustique.

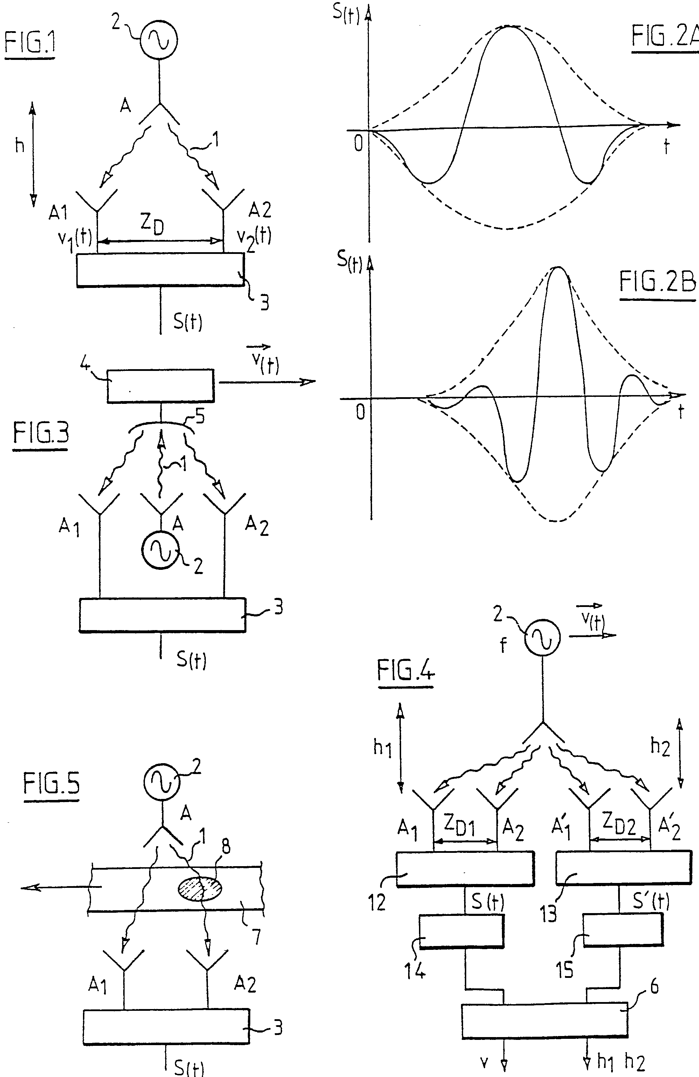

La figure 1 schématise une installation de mise en œuvre du procédé de la présente invention.

Le procédé de construction de systèmes micro-ondes et de traitement du signal par corrélation de la présente invention fait appel à un rayonnement micro-ondes schématisé à la figure 1 sous la référence 1 engendrée par un générateur 2 qui est une source micro-onde associée à une antenne A qui rayonne les micro-ondes 1 de fréquence f.

La présente invention fait appel à une source de rayonnement unique : la source présente des caractéristiques déterminées qui de préférence correspondront à une amplitude et une fréquence stable dans le temps.

Plus précisément, selon la présente invention, on utilise un générateur de micro-ondes de caractéristiques déterminées travaillant à une fréquence fixe ou à différentes fréquences, ou dont on fait varier la fréquence de façon continue ou de façon discrète au cours du temps.

Le rayonnement capté, par deux antennes A1 et A2 distantes d'une distance ZD, est dirigé vers un corrélateur 3 qui fournit un signal se sortie S(t).

Le procédé de construction de systèmes de micro-ondes et de traitement du signal par corrélation consiste à émettre un rayonnement micro-onde par le dit générateur de micro-onde dont les caractéristiques sont décrites ci-dessus ainsi qu'au moyen d'une antenne d'émission A, à capter à l'aide d'antennes de réception A1 et A2, situées en différents points, le rayonnement micro-onde émis, à diriger les signaux perçus par les antennes de réception A1 et A2 vers un ou plusieurs corrélateurs, puis à analyser le spectre de fréquence du signal de sortie S(t) du ou des corrélateurs.

Il est connu que si l'on désigne par v1(t) le signal perçu par l'antenne A1, et v2(t) le signal perçu par l'antenne A2, le corrélateur fournit en sortie un signal S(t) tel que :

$$S = \overline{Kv1(t) \cdot v2^*(t - \tau)} = KV1V2 \cos (\varphi + 2\pi f\tau)$$

relation dans laquelle I est une constante caractéristique du circuit v1(t) et v2(t) sont les tensions captées par les antennes respectivement dont les amplitudes sont v1 et v2, $\varphi$ est le déphasage qui correspond à la différence des trajets de l'onde entre l'antenne d'émission A et les antennes de réception A1 et A2, $\tau$ est le temps de retard introduit par le corrélateur 3.

Selon la présente invention, on analyse le spectre de fréquence du signal de sortie S(t) du ou des corrélateurs, tels que représentés à la figure 2a ou 2b, par transformée de Fourier (FFT) ou par tout dispositif permettant d'extraire le fondamental du signal de sortie ou encore par tout dispositif permettant de mesurer l'intervalle de temps séparant deux passages au zéro du dit signal de sortie.

La figure 1 représente une application à la cinémométrie pour la mesure de vitesse d'un mobile dont la direction de déplacement sera de préférence parallèle à l'axe imaginaire joignant les antennes A1 et A2 de réception. Dans cette application, la source de micro-onde est fixée au mobile, le mobile n'étant pas représenté par cette figure.

Dans le cas de la figure 1, les antennes de réception A1 et A2 seront disposées l'une par rapport à l'autre selon la direction de déplacement du mobile. Il s'agit par conséquent d'une disposition contraire à celle utilisée dans le cas de cinémométrie à effet Doppler mais présente un avantage incontestable par rapport à cette dernière en autorisant un positionnement de l'appareillage de mesure à l'extérieur de la trajectoire du mobile.

En prenant en considération les relations écrites précédemment qui donnent l'amplitude du signal de sortie S(t) du corrélateur 3, on obtient un signal en fonction du temps qui est du type donné aux figures 2a et 2b.

Ces signaux correspondent à des franges d'interférence étant donné que le déphasage $\tau$ varie avec le déplacement du mobile. Ces franges sont amorties puisque le couplage électro-magnétique entre les antennes d'émission A et de réception A1, A2 en regard est maximal lorsque ces antennes sont l'une en face de l'autre, ce couplage décroît lorsque l'antenne d'émission A d'une part et les antennes de réception A1 et A2 d'autre part, ne sont plus l'une en face de l'autre.

Particulièrement, les signaux illustrés aux figures 2a et 2b correspondent à un temps de retard $\tau = 0$.

Le signal S(t) de sortie du corrélateur 3 est d'autant plus longtemps significatif que la vitesse du mobile sera plus lente. Ainsi, dans l'exemple illustré aux figures 2, la figure 2b correspond à un mobile situé à la même distance h du corrélateur 3 que dans le cas envisagé à la figure 2a et qui se déplace avec une vitesse deux fois plus élevée de celle envisagée pour le cas de la figure 2a.

Dans ces conditions, en exploitant le spectre de fréquence de S(t) par transformée de Fourier ou par tout autre dispositif permettant d'extraire le fondamental du signal ou de mesurer l'intervalle de temps séparant deux passages au zéro du signal, il est possible alors de déterminer la distance et la vitesse du mobile, ceci notamment sans contact et à l'aide du même capteur.

Une variante du procédé de construction de systèmes micro-ondes et de traitement du signal par corrélation de la présente invention, appliquée à la cinémométrie est schématisée à la figure 3. L'exemple précédent présentait l'inconvénient de nécessiter un embarquement de la source de micro-onde 2 à bord du mobile dont on voulait mesurer la vitesse. Dans le cas de la figure 3, le générateur de micro-onde 2 est relié à une antenne d'émission A qui dirige le rayonnement micro-onde incident 1 en direction du mobile 4.

Le mobile 4 réfléchira une partie du rayonnement incident 1 vers les antennes de réception A1, A2. Les antennes de réception sont reliées à un corrélateur 3 qui délivrera un signal de sortie S(t) analogue au cas envisagé précédemment. Pour améliorer le procédé, le mobile pourra être équipé d'une antenne 5 ou tout autre dispositif passif permettant de réfléchir le signal incident 1.

Notons que selon la présente invention, les antennes utilisées peuvent être de types différents : antenne parabolique, antenne cornée, antenne « patch » ou plaquée, fonctionnant à distance en champ proche ou en champ lointain ou au contact.

Comme dans le cas de la figure 1, les antennes de réception A1 et A2 seront disposées relativement l'une par rapport à l'autre de telle sorte qu'elles soient alignées dans la direction de déplacement du mobile 4. L'antenne d'émission A pourra par exemple être située entre les antennes de réception A1 et A2 tel qu'illustré à la figure 3 mais pourra être également placée à une autre position.

Le corrélateur 3 utilisé pour la mise en œuvre du procédé de la présente invention pourra correspondre à celui décrit dans la demande de brevet en France « Thermographie micro-onde par corrélation » N° 81/09.281.

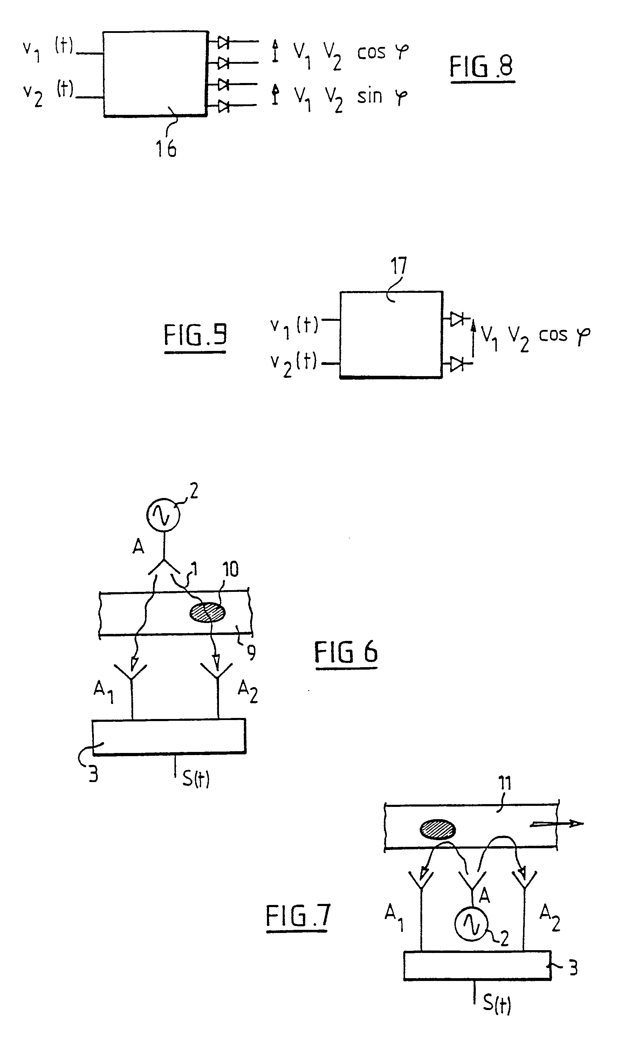

Toutefois, le corrélateur pourra également être réalisé en utilisant un transistor à effet de champ bigrille (FET bigrille). Il pourra être également réalisé en utilisant un « réseau 6 ports » (6 ports network), repéré 16 tel que le montre la figure 8, qui en fonction de entrées $v1(t)$ et $v2(t)$ donne en sortie des signaux V1 cos $\varphi$ et V2 sin $\varphi$.

Le corrélateur pourra également être réalisé en employant un coupleur hybride 180 degrés, repéré 17 suivi de deux détecteurs, tel que le montre la figure 9, et qui pour deux signaux d'entrée $v1(t)$ et $v2(t)$ donne un signal de sortie proportionnel à V1V2 cos $\varphi$.

Néanmoins, tout autre dispositif permettant d'obtenir un signal de sortie S(t) conforme à la relation donnée précédemment convient pour la mise en œuvre du procédé de la présente invention.

La figure 4 schématise un dispositif de mise en œuvre du procédé de construction de systèmes micro-ondes et de traitement du signal par corrélation de la présente invention appliqué au cas de la télémétrie.

Dans l'étude précédente, pour différentes positions relatives des antennes A, A1 et A2, on obtient des formes différentes du signal de sortie du corrélateur 3. Cette possibilité peut être exploitée pour connaître la position du mobile par exemple en utilisant deux ou plusieurs corrélateurs ayant des antennes de réception disposées chacune à des écartements distincts.

Dans le cas tel qu'illustré à la figure 4, l'intervalle ZD1 séparant les antennes de réception A1 et A2 du corrélateur N° 1, repéré 12 à la figure 4, est différent de l'intervalle ZD2 séparant les antennes de réception A'1 et A'2 du corrélateur N° 2, repéré 13 à la figure 4, en plaçant le système de réception, le

EP 0 168 335 B1

corrélateur N° 1, le corrélateur N° 2 et antennes A1 et A2, A'1 et A'2 à des emplacements différents et à des distances h1 et h2 différentes de la trajectoire du mobile.

Selon le procédé de la présente invention, le signal S(t) de sortie du corrélateur N° 1 repéré 12 est traité par un premier circuit de transformée de Fourier (FFT1), repéré 14 à la figure 4, le signal S'(t) de sortie du corrélateur N° 2 repéré 13 est traité par un deuxième circuit de transformée de Fourier (FFT2) repéré 15 à la figure 4 puis les signaux issus respectivement des circuits 14 (FFT1) et 15 (FFT2) sont traités par un circuit de traitement repéré 6 qui en sortie permettent de délivrer des informations de vitesse du mobile et des informations d'éloignement h1 du mobile vis-à-vis du couple d'antenne de réception A1 et A2, et d'éloignement h2 du mobile vis-à-vis du couple d'antenne de réception A'1 et A'2.

Comme il a été remarqué précédemment, les circuits de transformée de Fourier pourraient être remplacés par un circuit permettant d'extraire le fondamental du signal de sortie ou permettant de mesurer l'intervalle de temps séparant deux passages au zéro du dit signal de sortie.

Selon le procédé de la présente invention, il aurait pu également être utilisé pour un système d'émission et de corrélation travaillant à des fréquences différentes.

Selon un autre mode de réalisation de la présente invention, il est possible d'utiliser une antenne d'émission à balayage angulaire électronique pour la détermination de l'éloignement et de la vitesse du mobile. Ce système pourrait par exemple être utilisé dans le domaine de l'appareillage anti-collision.

En matière d'asservissement de direction et de poursuite, en considérant le cas envisagé à la figure 1, la source micro-onde 2 est fixe et le corrélateur 3 mobile ou la situation inverse. Lorsque le corrélateur 3 se déplace sur l'axe qui le relie à la source d'émission micro-onde 2 c'est-à-dire quand le déphasage $\tau$ est égal à zéro, le signal de sortie du corrélateur 3 est maximum pour $\tau = 0$, ce qui correspond à la relation exposée précédemment.

Cette propriété peut être exploitée pour réaliser un asservissement de direction ou de poursuite, ce procédé pouvant être étendu à l'espace en utilisant trois antennes de réception réparties selon trois coordonnées perpendiculaires entre elles. Cette application sera avantageuse en robotique.

Pour augmenter la précision du procédé, il est préférable de travailler avec un signal de sortie nul tel que S(t) = 0. Ainsi, selon la présente invention, on agit sur le temps de retard du corrélateur de façon continue ou de façon discrète et l'on ajuste le temps de retard $\tau$ du corrélateur à une valeur préférentielle égale à 1/4f avec f valeur de la fréquence du signal d'émission.

La figure 5 est relative au procédé de la présente invention appliqué à la détection d'hétérogénéité et de discontinuité dans un matériau. Dans ce cas, le cas général de la figure 1 s'applique et la source d'émission micro-ondes 2 et les antennes de réception A1 et A2 sont fixes.

Selon le procédé de l'invention, le matériau 7 dont on veut contrôler la partie interne est placé entre l'antenne A d'émission du rayonnement micro-onde et les antennes A1 et A2 de réception du dit rayonnement.

On déplace le matériau 7, qui se présente sous la forme d'une lame à face parallèle dans la zone considérée, parallèlement à l'axe joignant les antennes de réception A1 et A2. Le matériau à examiner présente des pertes moyennes en micro-onde ou est diélectrique de telle sorte que le signal St) en sortie de corrélateur ne soit pas nul.

Tant que la partie du matériau 7 à tester soumise aux rayonnements possède les mêmes propriétés de structure ou de géométrie, le signal S(t) demeure constant. Il s'agit des zones du matériau 7, situées entre l'antenne d'émission A et l'antenne de réception A1, et A2, traversées par le rayonnemnt électro-magnétique 1. Aussitôt qu'une hétérogénéité 8 ou une discontinuité telle que notamment provoquée par une épaisseur différente, ou une fissure, apparaît, celle-ci peut être décelée par variation du signal S(t) de sortie du corrélateur 3.

Par ailleurs, il est à remarquer qu'il est possible d'utiliser plusieurs dispositifs travaillant à des fréquences différentes.

La figure 6 s'applique au procédé de la présente invention dans le cas de la détection de l'évolution au cours du temps d'un paramètre physique électro-magnétique en fonction d'un autre paramètre physique dans un matériau tel l'humidité ou une hétérogénéité de structure.

Elle trouvera notamment son utilisation pour regarder l'évolution de la permittivité complexe d'un matériau en fonction de sa température. Dans ce cas, et selon la présente invention, on réalise les étapes suivantes :

on émet un rayonnement de micro-onde 1 engendré à l'aide d'une source de micro-onde 2 fixe et d'une antenne d'émission A,

on capte le rayonnement micro-onde émis à l'aide d'antennes de réception A1 et A2 dont les signaux de sortie sont dirigés vers un corrélateur 3 dont on analyse le signal de sortie,

on interpose entre l'antenne d'émission A et les antennes de réception A1 et A2, la matériau 9 à tester dont les caractéristiques physiques sont susceptibles d'évoluer dans le temps, la zone sous-investigation 10 du dit matériau 9 étant fixe par rapport aux antennes A, A1 et A2.

Tant que la zone 10 du matériau 9 à tester soumise aux rayonnements possède les mêmes propriétés de structure, le signal de sortie S(t) demeure constant. Aussitôt que la permittivité complexe de la zone 10 du matériau évolue en fonction de la température, cette modification est décelée par une variation du signal S(t) de sortie du corrélateur 3 qui peut permettre de contrôler cette évolution de propriété de la zone 10.

7

La figure 7 s'applique au procédé de la présente invention appliqué à un détecteur d'hétérogénéité et de discontinuité dans un matériau.

Précédemment, il a été décrit un procédé de traitement du signal par corrélation appliqué à la détection d'hétérogénéité et de discontinuité dans un matériau, le dit matériau étant sujet à un déplacement comme le montrait la figure 5.

L'application représentée à la figure 7 est une variante dans laquelle on réalise les étapes suivantes :

on émet un rayonnement de micro-onde engendré à l'aide d'une source de micro-onde 2 fixe et d'une antenne d'émission A,

on capte le rayonnement micro-onde émis à l'aide d'antennes de réception A1 et A2, dont les signaux de sorties sont dirigés vers un corrélateur 3 dont on analyse le signal de sortie S(t),

on fait défiler, parallèlement à l'axe imaginaire reliant les deux antennes de réception A1 et A2, le matériau à tester 11, les dites antennes A, A1, et A2 étant toutes disposées du même côté du matériau en mouvement relatif.

Dans ce cas, le signal émis par A est ensuite capté par A1 et A2 après avoir traversé une partie du matériau. Ce procédé peut servir notamment à déceler des variations de conductivité du matériau testé ou des discontinuités dans le matériau puisque ces variations vont induire des modifications observables du signal de sortie S(t).

D'autres mises en œuvre de la présente invention, à la portée de l'Homme de l'Art, auraient pu être envisagées sans pour autant sortir du cadre de celle-ci.

## Revendications

1. Procédé pour mettre en œuvre des systèmes micro-ondes et de traitement du signal par corrélation, le procédé utilisant le rayonnement micro-onde, des antennes de réception des micro-ondes ainsi qu'au moins un corrélateur, procédé caractérisé par le fait que :
   a) on dispose matériellement et relativement dans l'espace :
   une source micro-onde (2) dont les caractéristiques sont déterminées,
   une antenne d'émission (A) en relation avec la dite source micro-onde (2),
   au moins deux antennes de réception ($A_1$) et ($A_2$) situées en différents points et espacées l'une de l'autre d'une distance ZD déterminée,
   au moins un corrélateur, de temps de retard $\tau$, en relation avec les dites antennes de réception ($A_1$) et ($A_2$), le dit corrélateur (3) effectuant le produit des signaux présents à ses entrées à des instants différents entre eux du dit temps de retard $\tau$, et délivrant à sa sortie un signal de sortie S qui est une fonction périodique de la différence des trajets des ondes entre l'antenne d'émission (A) et chacune des antennes de réception ($A_1$), ($A_2$) pour des valeurs du temps de retard $\tau$,
   b) on émet un rayonnement micro-onde (1) unique à l'aide de la dite source micro-onde (2) et de la dite antenne d'émission (A),
   c) on capte à l'aide des dites antennes de réception ($A_1$) et ($A_2$), les signaux dus au dit rayonnement micro-onde émis, le signal perçu par l'antenne (1) étant désigné par $v_1(t)$ et celui perçu par l'antenne $A_2$ étant désigné par $v_2(t)$,
   d) on dirige les dits signaux $v_1(t)$ et $v_2(t)$ perçus par les antennes ($A_1$) et ($A_2$) vers le dit corrélateur (3), celui-ci délivrant alors en sortie un signal S donné par la relation suivante :

$$S = \overline{Kv_1(t) \cdot v_2^*(t-\tau)} = KV_1 V_2 \cos(\varphi + 2\pi f\tau)$$

relation dans laquelle K est une constante caractéristique du circuit, $v_1(t)$ et $v_2(t)$ sont les tensions captées par les antennes ($A_1$) et ($A_2$) respectivement dont les amplitudes sont $V_1$ et $V_2$, $\varphi$ est le déphasage qui correspond à la différence des trajets de l'onde entre l'antenne d'émission (A) et les antennes de réception ($A_1$) et ($A_2$) espacées de la distance ZD, $\tau$ est le temps de retard donné introduit par le corrélateur (3),
   e) on exploite le spectre de fréquence du signal de sortie S du corrélateur (3) par tout dispositif permettant de mesurer l'intervalle de temps séparant deux passages au zéro du dit signal de sortie S.

2. Procédé de mise en œuvre de systèmes micro-ondes et de traitement du signal par corrélation selon la revendication 1, caractérisé par le fait que l'on émet le rayonnement micro-onde (1) par un générateur micro-onde (2) travaillant en fréquence fixe, ou à différentes fréquences, ou dont on fait varier la fréquence de façon continue ou de façon discrète au cours du temps.

3. Procédé de mise en œuvre de systèmes micro-ondes et de traitement du signal par corrélation selon la revendication 1, caractérisé par le fait que l'on utilise des antennes de types différents tels que des antennes paraboliques, des antennes cornets, des antennes « patch » ou plaquées, fonctionnant à distance ou en contact.

4. Procédé de mise en œuvre de systèmes micro-ondes et de traitement du signal par corrélation selon la revendication 1, caractérisé par le fait que l'on utilise un corrélateur micro-onde mettant en œuvre soit un coupleur hybride 180° (17) suivi de deux détecteurs, soit un réseau « 6 ports » (16), soit un transistor à effet de champ FET bigrille.

EP 0 168 335 B1

5. Procédé de mise en œuvre de systèmes micro-ondes et de traitement du signal par corrélation selon la revendication 1, caractérisé par le fait que l'on utilise une antenne d'émission à balayage angulaire électronique.

6. Application à la mesure de la vitesse d'un mobile du procédé de mise en œuvre de systèmes micro-ondes et de traitement du signal par corrélation selon la revendication 1, le dit mobile se déplaçant à une vitesse donnée, caractérisée en ce que :

l'on fixe sur le mobile dont on veut déterminer la vitesse, la source d'émission de micro-onde (2), de caractéristiques déterminées,

on capte le rayonnement micro-onde (1) émis à l'aide des deux antennes qui sont fixes $(A_1)$, $(A_2)$, disposées sensiblement l'une par rapport à l'autre selon la direction de déplacement du mobile,

on dirige les signaux captés par les deux antennes fixes $(A_1)$ et $(A_2)$, vers le corrélateur (3), dont on analyse le spectre de fréquence du signal de sortie.

7. Application à la mesure de la vitesse d'un mobile, du procédé de mise en œuvre de systèmes micro-ondes et de traitement du signal par corrélation selon la revendication 1, le dit mobile se déplaçant à une vitesse donnée, caractérisée en ce que :

on dirige vers le mobile, sensiblement perpendiculaire à la direction de déplacement du mobile, un rayonnement micro-onde (1) émis par la source qui est fixe (2), de caractéristiques déterminées,

on capte le rayonnement réfléchi par le mobile (4) à l'aide des deux antennes qui sont fixes $(A_1)$ et $(A_2)$, disposées l'une par rapport à l'autre sensiblement selon la direction de déplacement du mobile,

on dirige les signaux captés par les deux antennes fixes $(A_1$ et $(A_2)$ vers le corrélateur (3), dont on analyse le spectre de fréquence du signal de sortie.

8. Application en télémétrie, pour la détermination de vitesse et de distance d'un mobile, du procédé de mise en œuvre de systèmes micro-ondes et de traitement du signal par corrélation selon la revendication 1, caractérisé en ce que :

on fixe sur le dit mobile dont la distance et la vitesse sont à déterminer, la source d'émission micro-onde (2), de caractéristiques déterminées,

on capte le rayonnement micro-ondes émis à l'aide d'un premier couple d'antennes qui sont fixes de réception $(A_1)$, $(A_2)$ présentant un écartement $ZD_1$ et disposées l'une par rapport à l'autre selon un axe parallèle à la direction de déplacement du mobile,

on dirige les signaux captés par les antennes de réception $(A_1)$ et $(A_2)$ vers un premier corrélateur (12), appelé corrélateur N° 1, dont le signal de sortie est traité par un premier dispositif permettant de mesurer l'intervalle de temps séparant deux passages au zéro du dit signal S, pour analyse le spectre de fréquence,

on capte le rayonnement micro-onde émis par la source (2) fixée au mobile à l'aide d'un second couple d'antennes $(A'_1)$ et $(A'_2)$ présentant un écartement ZD2 et disposées l'une par rapport à l'autre selon la direction de déplacement du mobile,

on dirige les signaux de réception captés par les antennes $(A'_1)$ et $(A'_2)$ vers un second corrélateur (13), appelé corrélateur N° 2, dont le signal de sortie est traité par un deuxième dispositif permettant de mesurer l'intervalle de temps séparant deux passages au zéro du dit signal S pour analyser le spectre de fréquence,

les signaux délivrés par les dits premier et second dispositifs de mesure d'intervalle de temps du signal S sont dirigés vers un circuit de traitement (6) qui permet en sortie de déterminer les distances $h_1$ et $h_2$ séparant l'antenne d'émission (A) des couples d'antennes de réception $(A_1)$, $(A_2)$, et $(A'_1)$ et $(A'_2)$.

9. Application en télémétrie selon la revendication 8, caractérisée par le fait que l'on utilise des sources d'émission micro-onde additionnelles.

10. Application à l'asservissement de direction ou de poursuite d'un mobile du procédé de mise en œuvre de systèmes micro-ondes et de traitement du signal par corrélation selon la revendication 1, caractérisée en ce que, la source micro-onde (2) et l'antenne (A) étant fixes, les antennes $(A_1)$ et $(A_2)$ et le corrélateur (3) étant mobiles :

on émet un rayonnement de micro-onde engendré à l'aide de la source micro-onde (2), et de l'antenne (A),

on capte le rayonnement micro-onde émis à l'aide du couple d'antennes de réception $(A_1)$ et $(A_2)$,

on dirige les signaux perçus par les antennes de réception vers le corrélateur (3) dont on analyse le signal de sortie.

11. Application à l'asservissement de direction ou de poursuite d'un mobile du procédé de mise en œuvre de systèmes micro-ondes et de traitement du signal par corrélation selon la revendication 1, caractérisée par le fait que, la source de micro-onde (2) et l'antenne A étant mobiles, les antennes $(A_1)$ et $(A_2)$ et le corrélateur (3) étant fixes :

on émet un rayonnement de micro-onde engendré à l'aide de la source micro-onde (2), et de l'antenne (A),

on capte le rayonnement micro-onde émis à l'aide du couple d'antennes de réception $(A_1)$ et $(A_2)$,

on dirige les signaux perçus par les antennes de réception vers le corrélateur (3) dont on analyse le signal de sortie.

12. Application selon la revendication 10 ou 11, caractérisée par le fait que l'on agit sur le temps de retard du corrélateur (3) de façon continue ou de façon discrète.

9

13. Application selon la revendication 12, caractérisée par le fait que l'on ajuste le temps de retard du corrélateur (3) pour que sa valeur soit égale à 1/4f avec f = fréquence du signal d'émission.

14. Application à la détection d'hétérogénéité et de discontinuité dans un matériau du procédé de mise en œuvre de systèmes micro-ondes et de traitement du signal par corrélation selon la revendication 1, caractérisée par le fait que :

on émet un rayonnement micro-onde (1) engendré à l'aide de la source micro-onde (2) qui est fixe et de l'antenne d'émission (A) qui est fixe,

on capte le rayonnement micro-onde émis à l'aide des antennes de réception (A₁), (A₂) qui sont fixes dont les signaux de sortie sont dirigés vers le corrélateur qui est fixe dont on analyse le signal de sortie,

on dispose entre l'antenne d'émission A et les antennes de réception (A₁) et (A₂), le matériau (7) à tester, qui se présente sous la forme d'une lame à face parallèle que l'on fait défiler parallèlement à l'axe imaginaire reliant les deux antennes de réception (A₁) et (A₂).

15. Application dans la détection de l'évolution au cours du temps d'un paramètre physique électro-magnétique en fonction d'un autre paramètre physique dans un matériau, résultant de l'évolution de la permittivité complexe d'un matériau en fonction de sa température, du procédé de mise en œuvre de systèmes micro-ondes et de traitement du signal par corrélation selon la revendication 1, caractérisée par le fait que :

on émet un rayonnement micro-onde (1) engendré à l'aide de la source micro-onde (2) qui est fixe et de l'antenne d'émission (A) qui est fixe,

on capte le rayonnement micro-onde émis à l'aide des antennes de réception (A₁) et (A₂) qui sont fixes dont les signaux de sortie sont dirigés vers le corrélateur (3) qui est fixe dont on analyse le signal de sortie,

on interpose entre l'antenne d'émission A et les antennes de réception (A₁) et (A₂), le matériau (9) à tester dont les caractéristiques physiques sont susceptibles d'évoluer dans le temps, la zone (10) sous investigation du dit matériau (9) étant fixe par rapport aux antennes (A), (A₁) et (A₂).

16. Application à la détection d'hétérogénéité et de discontinuité dans un matériau du procédé de mise en œuvre de systèmes micro-ondes et de traitement du signal par corrélation selon la revendication 1, caractérisée par le fait que :

on émet un rayonnement micro-onde (1) engendré à l'aide de la source micro-onde qui est fixe et de l'antenne d'émission (A) qui est fixe,

on capte le rayonnement micro-onde émis à l'aide des antennes de réception (A₁), (A₂) qui sont fixes, dont les signaux de sortie sont dirigés vers le corrélateur qui est fixe (3) dont on analyse le signal de sortie,

on fait défiler, parallèlement à l'axe imaginaire reliant les deux antennes de réception (A₁) et (A₂), le matériau à tester (11), les dites antennes (A, (A₁), (A₂) étant toutes disposées du même côté du matériau (11) en mouvement relatif.

## Claims

1. A method of setting microwave systems to work and of processing the signal by correlation, the method employing microwave radiation and microwave receiver antennae as well as at least one correlator and being characterized by the fact that :

a) one arranges materially and relatively in space :

one microwave source (2) the characteristics of which are given ;

one emitter antenna (A) in communication with the said microwave source (2) ;

at least two receiver antennae (A₁) and (A₂) situated at different points and spaced from one another at a given distance ZD ;

at least one correlator having a delay time τ, in communication with the said receiver antennae (A₁) and (A₂), the said correlator (3) working out the product of the signals present at its inputs at instants differing from one another by the said delay time τ and delivering at its output an output signal S which is a periodic function of the difference between the distances covered by the waves between the emitter antenna (A) and each of the receiver antennae (A₁), (A₂) for values of the delay time τ ;

b) a single microwave radiation (1) is emitted by means of the said microwave source (2) and the said emitter antenna (A) ;

c) the signals due to the said emitted microwave radiation are picked up by means of the said receiver antennae (A₁ and (A₂), the signal perceived by the antenna (A₁) being designated by v₁(t) and that perceived by the antenna (A₂) being designated by v₂(t) ;

d) the said signals v₁(t) and v₂(t) perceived by the antennae (A₁) and (A₂) are directed towards the said correlator (3) which then delivers as output a signal S given by the following equation :

$$S = \overline{Kv_1(t) \cdot v_2^*(t - \tau)} = KV_1 V_2 \cos(\varphi + 2\pi f\tau)$$

being an equation in which K is a constant characteristic of the circuit, v₁(t) and v₂(t) are the voltages picked up by the antennae (A₁) and (A₂) respectively, the amplitudes of which are V₁ and V₂, φ is the phase shift which corresponds with the difference between the distances covered by the wave between the emitter antenna (A) and the receiver antennae (A$_1$) and (A$_2$) spaced at the distance ZD and $\tau$ is the given delay time introduced by the correlator (3) ;

e) the frequency spectrum of the output signal S from the correlator (3) is developed by any device enabling the interval of time to be measured which separates two passes through zero by the said output signal S.

2. A method of setting microwave systems to work and of processing the signal by correlation as in Claim 1, characterized by the fact that the microwave radiation (1) is emitted by a microwave generator (2) working at fixed frequency or at different frequencies or the frequency of which is made to vary continuously or discretely in the course of time.

3. A method of setting microwave systems to work and of processing the signal by correlation as in Claim 1, characterized by the fact that antennae of divers types are employed, such as parabolic antennae, horn antennae, or « patch » or flattened antennae, operating remotely or in contact.

4. A method of setting microwave systems to work and of processing the signal by correlation as in Claim 1, characterized by the fact that a microwave correlator is employed which uses either a 180° hybrid coupler (17) followed by two detectors, or a « 6 ports » network (16) or a doublegrid FET field effect transistor.

5. A method of setting microwave systems to work and of processing the signal by correlation as in Claim 1, characterized by the fact that an emitter antenna is employed, having an electronic angular sweep.

6. Application to the measurement of the velocity of a moving body, of the method of setting microwave systems to work and of processing the signal by correlation as in Claim 1, the said moving body moving at a given velocity, characterized in that :

— the microwave emitter source (2) having given characteristics is attached to the moving body of which one desires to measure the velocity ;

— the microwave radiation (1) emitted is picked up by means of the two antennae (A$_1$), (A$_2$) which are fixed and arranged with respect to one another substantially along the direction of motion of the moving body ;

— the signals picked up by the two fixed antennae (A$_1$) and (A$_2$) are directed towards the correlator (3), the frequency spectrum of the output signal from which is analysed.

7. Application to the measurement of the velocity of a moving body, of the method of setting microwave systems to work and of processing the signal by correlation as in Claim 1, the said moving body moving at a given velocity, characterized in that :

— a microwave radiation (1) of given characteristics, emitted by the source (2) which is fixed, is directed towards the moving body, substantially perpendicular to the direction of motion of the moving body ;

— the radiation reflected by the moving body (4) is picked up by means of the two antennae (A$_1$) and (A$_2$) which are fixed and arranged with respect to one another substantially along the direction of motion of the moving body ;

— the signals picked up by the two fixed antennae (A$_1$) and (A$_2$) are directed towards the correlator (3), the frequency spectrum of the output signal from which is analysed.

8. Application is telemetry to determination of the velocity and distance of a moving body, of the method of setting microwave systems to work and of processing the signal by correlation as in Claim 1, characterized in that :

— the microwave emitter source (2) having given characteristics is attached to the said moving body, the distance and velocity of which are to be determined ;

— the microwave radiation emitted is picked up by means of a first pair of receiver antennae (A$_1$) and (A$_2$) which are fixed and exhibit a distance apart ZD$_1$ and are arranged with respect to one another along an axis parallel with the direction of motion of the moving body ;

— the signals picked up by the receiver antennae (A$_1$) and (A$_2$) are directed towards a first correlator (12) called correlator n° 1, the output signal from which is processed by a first device enabling the interval of time to be measured which separates two passes through zero by the said signal S, for analysing the frequency spectrum ;

— the microwave radiation emitted by the source (2) attached to the moving body is picked up by means of a second pair of antennae (A$_1$') and (A$_2$') which exhibit a distance apart ZD2 and are arranged with respect to one another along the direction of motion of the moving body ;

— the reception signals picked up by the antennae (A$_1$') and (A$_2$') are directed towards a second correlator (13) called correlator n° 2, the output signal from which is processed by a second device enabling the interval of time to be measured which separates two passes through zero by the said signal S, for analysing the frequency spectrum ;

— the signals delivered by the said first and second devices for measuring the interval of time from the signal S are directed towards a processing circuit (6) which as its output enables the distances H$_1$ and h$_2$ to be determined which separate the emitter antenna A from the pairs of receiver antennae (A$_1$), (A$_2$) and (A$_1$') and (A$_2$').

9. Application in telemetry as in Claim 8, characterized by the fact that additional microwave emitter sources are employed.

10. Application to the control of direction or pursuit of a moving body, of the method of setting microwave systems to work and of processing the signal by correlation as in Claim 1, characterized in that the microwave source (2) and the antenna (A) being fixed and the antennae (A₁) and (A₂) and the correlator (3) being mobile :

— a microwave radiation is emitted, which is generated by means of the microwave source (2) and the antenna (A) ;

— the emitted microwave radiation is picked up by means of the pair of receiver antennae (A₁) and (A₂) ;

— the signals perceived by the receiver antennae are directed towards the correlator (3), the output signal from which is analysed.

11. Application to the control of direction or pursuit of a moving body, of the method of setting microwave systems to work and of processing the signal by correlation as in Claim 1, characterized by the fact that the microwave source (2) and the antenna (A) being mobile and the antennae (A₁) and (A₂) and the correlator (3) being fixed :

— a microwave radiation is emitted, which is generated by means of the microwave source (2) and the antenna (A) ;

— the emitted microwave radiation is picked up by means of the pair of receiver antennae (A₁) and (A₂) ;

— the signals perceived by the receiver antennae are directed towards the correlator (3), the output signal from which is analysed.

12. Application as in Claim 10 or 11, characterized by the fact that one acts upon the delay time of the correlator (3) continuously or discretely.

13. Application as in Claim 12, characterized by the fact that the delay time of the correlator (3) is adjusted so that its value is equal to $1/4f$ where $f =$ the frequency of the signal emitted.

14. Application to the detection of heterogeneity and discontinuity in a material, of the method of setting microwave systems to work and of processing the signal by correlation as in Claim 1, characterized by the fact that :

— a microwave radiation (1) is emitted, which is generated by means of the microwave source (2) which is fixed and the emitter antenna (A) which is fixed ;

— the emitted microwave radiation is picked up by means of the receiver antennae (A₁) and (A₂) which are fixed and the output signals from which are directed towards the correlator which is fixed and the output signal from which is analysed ;

— the material (7) to be tested is arranged between the emitter antenna (A) and the receiver antennae (A₁) and (A₂), appearing in the form of a blade having parallel faces and being made to move past in parallel with the imaginary axis connecting the two receiver antennae (A₁) and (A₂).

15. Application in the detection of the development in the course of time of an electromagnetic physical parameter as a function of another physical parameter in a material, resulting from the development of the complex permittivity of a material as a function of its temperature, of the method of setting microwave systems to work and of processing the signal by correlation as in Claim 1, characterized by the fact that :

— a microwave radiation (1) is emitted, which is generated by means of the microwave source (2) which is fixed and the emitter antenna (A) which is fixed ;

— the emitted microwave radiation is picked up by means of the receiver antennae (A₁) and (A₂) which are fixed and the output signals from which are directed towards the correlator (3) which is fixed and the output signal from which is analysed ;

— the material (9) to be tested, the physical characteristics of which are capable of developing with time, is interposed between the emitter antenna (A) and the receiver antennae (A₁) and (A₂), the zone (10) under investigation in the said material (9) being fixed with respect to the antennae (A), (A₁) and (A₂).

16. Application to the detection of heterogeneity and discontinuity in a material, of the method of setting microwave systems to work and of processing the signal by correlation as in Claim 1, characterized by the fact that :

— a microwave radiation (1) is emitted, which is generated by means of the microwave source (2) which is fixed and the emitter antenna (A) which is fixed ;

— the emitted microwave radiation is picked up by means of the receiver antennae (A₁) and (A₂) which are fixed and the output signals from which are directed towards the correlator which is fixed and the output signal from which is analysed ;

— the material (11) to be tested is made to move past in parallel with the imaginary axis connecting the two receiver antennae (A₁) and (A₂), all the said antennae (A), (A₁) and (A₂) being arranged on the same side of the material (11) in relative motion.

## Patentansprüche

1. Verfahren für den Einsatz von Mikrowellensystemen und Systemen zur Verarbeitung des Signals

EP 0 168 335 B1

durch Korrelation, bei dem die Mikrowellenstrahlung, Antennen zum Empfang der Mikrowellen, sowie mindestens ein Korrelator verwendet werden, dadurch gekennzeichnet, daß :

a) in dem Raum materiell und relativ zueinander angeordnet sind :

— eine Mikrowellenquelle (2) mit vorgegebenen Eigenschaften,

— eine Sendeantenne (A), die in Beiziehung zu der besagten Mikrowellenquelle (2) steht,

— mindestens zwei Empfangsantennen $(A_1)$ und $(A_2)$, die an verschiedenen Punkten angeordnet sind und einen vorgegebenen Abstand $Z_D$ voneinander haben,

— mindestens ein Korrelator für die Verzögerungszeit $\tau$, der in Beziehung zu den besagten Empfangsantennen $(A_1)$ und $(A_2)$ steht, wobei der besagte Korrelator (3) das Produkt der Signale bildet, die zu Zeitpunkten, die um die besagte Verzögerungszeit $\tau$ auseinanderliegen, an seinen Eingängen liegen, und an seinem Ausgang ein Ausgangssignal S liefert, das für vorgegebene Werte der Verzögerungszeit $\tau$ eine periodische Funktion der Differenz der Weglängen der Wellen zwischen der Sendeantenne (A) und jeder der Empfangsantennen $(A_1)$, $(A_2)$ ist.

b) mit Hilfe der besagten Mikrowellenquelle (2) und der besagten Sendeantenne (A) eine einzige Mikrowellenstrahlung ausgesendet wird,

c) mit Hilfe der besagten Empfangsantennen $(A_1)$ und $(A_2)$ die von der besagten Mikrowellenstrahlung herrührenden Signale aufgefangen werden, wobei das von der Antenne $(A_1)$ aufgenommene Signal mit $v_1(t)$, und das von der Antenne $(A_2)$ aufgenommene Signal mit $v_2(t)$ bezeichnet wird,

d) die von den Antennen $(A_1)$ und $(A_2)$ aufgenommenen besagten Signale $v_1(t)$ und $v_2(t)$ nach dem besagten Korrelator (3) weitergeleitet werden, der dann am Ausgang ein Signal S liefert, für das die folgende Beziehung gilt :

$$S = K \cdot v_1(t) \cdot v_2(t - \tau) = K \cdot V_1 V_2 \cdot \cos (\varphi + 2\pi f\tau)$$

wobei in dieser Beziehung K eine für den Kreis charakteristische Konstante ist, $v_1(t)$ und $v_2(t)$ die von den Antennen $(A_1)$ und $(A_2)$ aufgefangenen Spannungen mit den Amplituden $V_1$ und $V_2$ sind, $\varphi$ die Phasenverschiebung ist, die der Differenz der Weglängen der Welle zwischen der Sendeantenne (A) und den Empfangsantennen $(A_1)$ und $(A_2)$ entspricht, die einen Abstand $Z_D$ voneinander haben, und $\tau$ die vorgegebene Verzögerungszeit ist, die von dem Korrelator (3) eingegeben wird,

e) das Frequenzspektrum des Ausgangssignals S des Korrelators (3) mittels einer Vorrichtung ausgewertet wird, mit der das Zeitintervall zwischen zwei Nulldurchgängen des besagten Ausgangssignals S gemessen werden kann.

2. Verfahren für den Einsatz von Mikrowellensystemen und Systemen zur Verarbeitung des Signals durch Korrelation, gemäß Anspruch 1, dadurch gekennzeichnet, daß die Mikrowellenstrahlung (1) von einem Mikrowellengenerator (2) ausgesendet wird, der mit einer festen Frequenz, oder mit verschiedenen Frequenzen arbeitet, oder dessen Frequenz im Laufe der Zeit kontinuierlich oder stufenweise variiert wird.

3. Verfahren für den Einsatz von Mikrowellensystemen und Systemen zur Verarbeitung des Signals durch Korrelation, gemäß Anspruch 1, dadurch gekennzeichnet, daß Antennen verschiedener Art verwendet werden, wie beispielsweise Parabolantennen, Hornantennen oder Patchantennen bzw. plattierte Antennen, die in einem gewissen Abstand, oder in Kontakt funktionieren.

4. Verfahren für den Einsatz von Mikrowellensystemen und Systemen zur Verarbeitung des Signals durch Korrelation, gemäß Anspruch 1, dadurch gekennzeichnet, daß ein Mikrowellenkorrelator verwendet wird, der einen 180°-Richtkoppler (17), gefolgt von zwei Detektoren, oder ein Antennensystem (16) mit 6 Eingängen, oder einen Feldeffekttransistor mit zwei Gates aufweist.

5. Verfahren für den Einsatz von Mikrowellensystemen und Systemen zur Verarbeitung des Signals durch Korrelation, gemäß Anspruch 1, dadurch gekennzeichnet, daß eine Sendeantenne mit elektronischer Strahlschwenkung verwendet wird.

6. Anwendung des Verfahrens für den Einsatz von Mikrowellensystemen und Systemen zur Verarbeitung des Signals durch Korrelation, gemäß Anspruch 1, zur Messung der Geschwindigkeit eines Körpers, der sich mit einer bestimmten Geschwindigkeit bewegt, dadurch gekennzeichnet, daß :

— auf dem bewegten Körper, dessen Geschwindigkeit bestimmt werden soll, die Mikrowellen-Sendequelle (2) befestigt wird, die bestimmte Eigenschaften aufweist,

— die ausgesandte Mikrowellenstrahlung (1) mit Hilfe der zwei festen Antennen $(A_1)$, $(A_2)$ aufgefangen wird, die im wesentlichen entsprechend der Bewegungsrichtung des bewegten Körpers angeordnet sind,

— die von den zwei festen Antennen $(A_1)$ und $(A_2)$ aufgefangenen Signale nach dem Korrelator (3) weitergeleitet werden, und das Frequenzspektrum des Ausgangssignals dieses Korrelators (3) analysiert wird.

7. Anwendung des Verfahrens für den Einsatz von Mikrowellensystemen und Systemen zur Verarbeitung des Signals durch Korrelation, gemäß Anspruch 1, zur Messung der Geschwindigkeit eines Körpers, der sich mit einer bestimmten Geschwindigkeit bewegt, dadurch gekennzeichnet, daß :

— eine von der festen Quelle (2), die bestimmte Eigenschaften aufweist, ausgesandte Mikrowellenstrahlung (1) im wesentlichen senkrecht zur der Bewegungsrichtung des Körpers zu dem Körper hin gerichtet wird,

EP 0 168 335 B1

— die von dem bewegten Körper (4) reflektierte Strahlung mit Hilfe von zwei festen Antennen (A₁) und (A₂) aufgefangen wird, die im wesentlichen entsprechend der Bewegungsrichtung des bewegten Körpers angeordnet sind,

— die von den zwei festen Antennen (A₁) und (A₂) aufgefangenen Signale nach dem Korrelator (3) weitergeleitet werden, und das Frequenzspektrum des Ausgangssignals dieses Korrelators (3) analysiert wird.

8. Anwendung des Verfahrens für den Einsatz von Mikrowellensystemen und Systemen zur Verarbeitung des Signals durch Korrelation, gemäß Anspruch 1, in der Telemetrie zur Bestimmung der Geschwindigkeit und der Entfernung eines Körpers, dadurch gekennzeichnet, daß :

— die Mikrowellen-Sendequelle (2), die bestimmte Merkmale aufweist, auf dem besagten Körper, dessen Entfernung und Geschwindigkeit bestimmt werden sollen, befestigt wird,

— die ausgesandte Mikrowellenstrahlung mit Hilfe eines ersten Paars fester Empfangsantennen (A₁), (A₂) aufgefangen wird, die einen Abstand $Z_{D1}$ voneinander haben, und entsprechend einer zu der Bewegungsrichtung des Körpers parallelen Achse angeordnet sind,

— die von den Empfangsantennen (A₁) und (A₂) aufgefangenen Signale nach zu einem ersten Korrelator (12) weitergeleitet werden, der Korrelator Nr. 1 genannt wird, und dessen Ausgangssignal von einer ersten Vorrichtung verarbeitet wird, mit der das Zeitintervall zwischen zwei Nulldurchgängen des besagten Signals S gemessen werden kann, um das Frequenzspektrum zu analysieren,

— die von der auf dem bezwegten Körper befestigten Quelle (2) ausgesandte Mikrowellenstrahlung mit Hilfe eines zweiten Paars fester Antennen (A₁') und (A₂') aufgefangen wird, die einen Abstand $Z_{D2}$ voneinander haben, und entsprechend der Bewegungsrichtung des Körpers angeordnet sind,

— die von den Antennen (A₁') und (A₂') aufgefangenen Empfangssignale nach einem zweiten Korrelator (13) weitergeleitet werden, der Korrelator Nr. 2 genannt wird, und dessen Ausgangssignal von einer zweiten Vorrichtung verarbeitet wird, mit der das Zeitintervall zwischen zwei Nulldurchgängen des besagten Signals S' gemessen werden kann, um das Frequenzspektrum zu analysieren,

— die Signale, die von der besagten ersten und zweiten Vorrichtung zur Messung des Zeitintervalls des Signals S geliefert werden, nach einer Verarbeitungsschaltung (6) weitergeleitet werden, an deren Ausgang die Abstände $h_1$ und $h_2$ bestimmt werden können, die zwischen der Sendeantenne (A) und den Empfangsantennen-Paaren (A₁), (A₂) bzw. (A₁'), A₂') liegen.

9. Anwendung in der Telemetrie gemäß Anspruch 8, dadurch gekennzeichnet, daß zusätzliche Mikrowellen-Sendequellen verwendet werden.

10. Anwendung des Verfahrens für den Einsatz von Mikrowellensystemen und Systemen zur Verarbeitung des Signals durch Korrelation, gemäß Anspruch 1, zur Richtungs- oder Verfolgungssteuerung eines bewegten Körpers, wobei die Mikrowellenquelle (2) und die Antenne (A) fest sind, und die Antennen (A₁) und (A₂) und der Korrelator (3) mobil sind, dadurch gekennzeichnet, daß :

— eine mit Hilfe der Mikrowellenquelle (2) und der Antenne (A) erzeugte Mikrowellenstrahlung ausgesendet wird,

— die ausgesandte Mikrowellenstrahlung mit Hilfe des Empfangsantennen-Paares (A₁) und (A₂) aufgefangen wird,

— die von den Emfangsantennen aufgenommenen Signale nach dem Korrelator (3) weitergeleitet werden, dessen Ausgangssignal analysiert wird.

11. Anwendung des Verfahrens für den Einsatz von Mikrowellensystemen und Systemen zur Verarbeitung des Signals durch Korrelation, gemäß Anspruch 1, zur Richtungs- oder Verfolgungssteuerung eines bewegten Körpers, wobei die Mikrowellenquelle (2) und die Antenne (A) mobil sind, und die Antennen (A₁) und (A₂) und der Korrelator (3) fest sind, dadurch gekennzeichnet, daß :

— ein mit Hilfe der Mikrowellenquelle (2) und der Antenne (A) erzeugte Mikrowellenstrahlung ausgesendet wird,

— die ausgesandte Mikrowellenstrahlung mit Hilfe des Empfangsantennen-Paares (A₁) und (A₂) aufgefangen wird,

— die von dem Empfangsantennen aufgenommenen Signale nach dem Korrelator (3) weitergeleitet werden, dessen Ausgangssignal analysiert wird.

12. Anwendung gemäß Anspruch 10 oder 11, dadurch gekennzeichnet, daß die Verzögerungszeit des Korrelators (3) kontinuierlich oder stufenweise variiert wird.

13. Anwendung gemäß Anspruch 12, dadurch gekennzeichnet, daß die Verzögerungszeit des Korrelators (3) so eingestellt wird, daß ihr Wert gleich 1/4f ist, mit f = Frequenz des Sendesignals.

14. Anwendung des Verfahrens für den Einsatz von Mikrowellensystemen und Systemen zur Verarbeitung des Signals durch Korrelation, gemäß Anspruch 1, zum Nachweis von Heterogenitäten und Diskontinuitäten in einem Material, dadurch gekennzeichnet, daß :

— eine mit Hilfe der festen Mikrowellenquelle (2) und der festen Sendeantenne (A) erzeugte Mikrowellenstrahlung (1) ausgesendet wird,

— die ausgesandte Mikrowellenstrahlung mit Hilfe der festen Empfangsantennen (A₁), (A₂) aufgefangen wird, deren Ausgangssignale nach dem festen Korrelator weiter geleitet werden, dessen Ausgangssignal analysiert wird,

— zwischen der Sendeantenne (A) und den Empfangsantennen (A₁) und (A₂) das zu testende Material (7) angeordnet wird, das die Form einer dünnen Platte mit parallelen Flächen hat, die parallel zu

14

der imaginären Verbindungsachse der zwei Empfangsantennen ($A_1$) und ($A_2$) vorbeigeschoben wird.

15. Anwendung des Verfahrens für den Einsatz von Mikrowellensystemen und Systemen zur Verarbeitung des Signals durch Korrelation, gemäß Anspruch 1, zum Nachweis der zeitlichen Veränderung eines elektromagnetischen Parameters eines Materials, die eine Folge der Veränderung der komplexen Dielektrizitätskonstante eines Materials in Abhängigkeit von der Temperatur ist, dadurch gekennzeichnet, daß :

— eine mit Hilfe der festen Mikrowellenquelle (2) und der festen Sendeantenne (A) erzeugte Mikrowellenstrahlung (1) ausgesendet wird,

— die ausgesandte Mikrowellenstrahlung mit Hilfe der festen Empfangsantennen ($A_1$), ($A_2$) aufgefangen wird, deren Ausgangssignale nach dem festen Korrelator (3) weitergeleitet werden, dessen Ausgangssignal analysiert wird,

— zwischen der Sendeantenne (A) und den Empfangsantennen ($A_1$) und ($A_2$) das zu testende Material (9) eingeschoben wird, dessen physikalische Eigenschaften sich im Laufe der Zeit verändern können, wobei die untersuchte Zone (10) des besagten Materials (9) bezüglich der Antennen (A), ($A_1$) und ($A_2$) fest ist.

16. Anwendung des Verfahrens für den Einsatz von Mikrowellensystemen und Systemen zur Verarbeitung des Signals durch Korrelation, gemäß Anspruch 1, zum Nachweis von Heterogenitäten und Diskontinuitäten in einem Material, dadurch gekennzeichnet, daß :

— eine mit Hilfe der festen Mikrowellenquelle (2) und der festen Sendeantenne (A) erzeugte Mikrowellenstrahlung (1) ausgesendet wird,

— die ausgesandte Mikrowellenstrahlung mit Hilfe der festen Empfangsantennen ($A_1$), ($A_2$) aufgefangen wird, deren Ausgangssignale nach dem festen Korrelator (3) weitergeleitet werden, dessen Ausgangssignal analysiert wird,

— das zu testende Material (11) parallel zu der imaginären Verbindungsachse der zwei Empfangsantennen ($A_1$) und ($A_2$) vorbeibewegt wird, wobei die besagten Antennen (A), ($A_1$), ($A_2$) alle auf derselben Seite des relativ dazu bewegten Materials (11) angeordnet sind.

FIG.1

FIG.2A

FIG.2B

FIG.3

FIG.4

FIG.5

$v_1(t)$

$v_2(t)$

$V_1 V_2 \cos \varphi$

$V_1 V_2 \sin \varphi$

FIG.8

16

FIG.9

17

$v_1(t)$

$v_2(t)$

$V_1 V_2 \cos \varphi$

2

A

1   10

9

FIG 6

$A_1$   $A_2$

3

$S(t)$

11

FIG.7

$A_1$   A   $A_2$

2

3

$S(t)$

2